# EUROPÄISCHE PATENTSCHRIFT

(11) **EP 2 988 953 B1**
(45) Veröffentlichungstag und Bekanntmachung des Hinweises auf die Patenterteilung: **26.07.2017**
(21) Anmeldenummer: 14715543.6
(22) Anmeldetag: 31.03.2014
(51) Int. Cl.: B60B 33/00, B60B 33/02

(54) **MOBILTEIL MIT ROLLENLAGEREINHEIT**
MOBILE PART HAVING A ROLLER BEARING UNIT
PIÈCE MOBILE ÉQUIPÉE D'UN ENSEMBLE SUPPORT À ROULETTE

(30) Priorität: 25.04.2013 DE 102013007112
(43) Veröffentlichungstag der Anmeldung: 02.03.2016
(73) Patentinhaber: Sew-Eurodrive GmbH & Co. KG, 76646 Bruchsal (DE)
(72) Erfinder: WEIS, Patrick, 76698 Ubstadt-Weiher (DE); MANZ, Friedrich, 76703 Kraichtal-Münzesheim (DE); SCHÖNUNG, Frank, 76676 Graben-Neudorf (DE)
(86) Internationale Anmeldenummer: PCT/EP2014/000855
(87) Internationale Veröffentlichungsnummer: WO 2014/173490

(56) Entgegenhaltungen:
- EP-A1- 0 434 916
- EP-A1- 2 301 764
- US-A1- 2004 064 915

## Beschreibung

Die Erfindung betrifft eine Mobilteil mit Rollenlagereinheit gemäß dem Oberbegriff von Anspruch 1. Es ist allgemein bekannt, dass an Mobilteilen, wie Einkaufwägen in Supermärkten, Lenkrollen angeordnet sind, wobei Rollen an einer Schwenkeinheit vorgesehen sind und abhängig von der Fahrtrichtung sich ausrichten.

Aus der EP 0 434 916 A1 ist ein Mobilteil mit einer Lenkrolle bekannt, wobei die Fahrrolle drehbar in einer Schwenkeinheit gelagert ist.

Aus der US 2004/0064915 A1 ist ein Mobilteil mit einer Lenkrolle bekannt, bei der die Bremse durch einen Elektromagneten betätigbar ist.

Der Erfindung liegt daher die Aufgabe zugrunde, ein Mobilteil weiterzubilden, wobei eine elektromagnetisch betätigbare Trommelbremse vorgesehen ist.

Erfindungsgemäß wird die Aufgabe bei dem Mobilteil nach den in Anspruch 1 angegebenen Merkmalen gelöst.

Wichtige Merkmale der Erfindung bei dem Mobilteil sind, dass es mit Rollenlagereinheit vorgesehen ist, insbesondere mit Lenkrolle ausgeführt ist,
wobei eine Rolle, insbesondere Fahrrolle, also Rolle der Lenkrolle, drehbar gelagert ist in einer Schwenkeinheit, welche über ein Drehlager am Gestell des Mobilteils gelagert ist, insbesondere wobei die Drehachsen der beiden Drehlagerungen zueinander senkrecht ausgerichtet sind, insbesondere wobei die Drehachse des Drehlagers zum Schwenken parallel zur Normalenrichtung der von der Rolle berührten Fahrfläche des Mobilteils ausgerichtet ist,
**wobei** an der Rolle eine Trommelbremse ausgebildet ist,
wobei die Betätigung der Trommelbremse von einem Elektromagnet bewirkbar ist, welcher am Gestell des Mobilteils verbunden ist,
wobei die Trommelbremse vom Elektromagneten über ein Keilgetriebe betätigbar ist.

Von Vorteil ist dabei, dass die Betätigung durch das Drehlager der Schwenkeinheit hindurch ausführbar ist. Dabei ist also der Elektromagnet am Gestell des Mobilteils befestigt und muss nicht in der Schwenkeinheit integriert werden. Somit ist eine robuste Konstruktion ermöglicht. Mittels des als Winkelgetriebe ausgeführten Keilgetriebes ist eine Umlenkung der vom Elektromagneten bewirkten Verschiebungsrichtung eines Ankerteils des Elektromagneten in die Querrichtung bewirkbar. Somit ist ein besonders einfach aufgebautes Mittel zur Umlenkung der Betätigungskraft ermöglicht.

Bei einer vorteilhaften Ausgestaltung ist zwischen Elektromagnet und Keilgetriebe eine Kupplung angeordnet, insbesondere eine eine Kugel umfassende Kupplung. Von Vorteil ist dabei, dass Fluchtungsfehler zwischen dem Ankerteil des Elektromagneten und dem als weiteres Kupplungsteils verwendeten Riegelteils, also eintreibenden Teils des Keilgetriebes , ermöglicht ist.

Bei einer vorteilhaften Ausgestaltung weist der Elektromagnet ein verschiebbar angeordnetes Ankerteil auf, welches von einem Federelement auf ein Riegelteil des Keilgetriebes drückbar ist, insbesondere bei Nichtbestromung der Spule des Elektromagneten,
so dass ein weiteres Riegelteil des Keilgetriebes verschoben wird, insbesondere in einer Richtung, welche einen nicht verschwindenden Winkel zur Verschiebungsrichtung des Ankerteils aufweist, insbesondere einen senkrechten Winkel zur Verschiebungsrichtung des Ankerteils aufweist. Von Vorteil ist dabei, dass das weitere Riegelteil in Querrichtung verschiebbar ist und ein zweites weiteres Riegelteil entgegen der Querrichtung verschiebbar ist. Somit ist die Betätigung einer Trommelbremse ermöglicht.

Bei einer vorteilhaften Ausgestaltung weist zur Bildung des Keilgetriebes eines der Riegelteile eine Schrägfläche auf und ist eine auf der Schrägfläche abrollbare Rolle am anderen Riegelteil gelagert,
insbesondere wobei die Normalenrichtung der Schrägfläche einen nicht verschwindenden Winkel zur Verschiebungsrichtung des Ankerteils aufweist. Von Vorteil ist dabei, dass das Keilgetriebe in besonders einfacher Weise ausgebildet ist.

Bei einer vorteilhaften Ausgestaltung ist als Kupplung zwischen Ankerteil und Riegelteil eine Kugel zwischengeordnet, insbesondere in einer Vertiefung des Ankerteils und in einer Vertiefung des Riegelteils hineinragt und/oder angeordnet ist. Von Vorteil ist dabei, dass eine einfache Kupplung mittels der Kugel erreichbar ist und die Kugel stets gehalten ist, weil das Federelement des Elektromagneten und das zwischen den Bremsbelagträgern der Trommelbremse angeordnete Federelement die Kugel stets andrücken, insbesondere also nicht freigeben.

Bei einer vorteilhaften Ausgestaltung ist die Spule in einem Spulenkerngehäuseteil angeordnet, das mit einem von der Spule zumindest teilweise umgebenen Spulenkern verbunden ist,
insbesondere wobei zwischen Ankerteil und Spulenkern ein Arbeitsluftspalt angeordnet ist, welcher im von der Spule in Längsrichtung überdeckten Bereich angeordnet ist. Von Vorteil ist dabei, dass das Gehäuse aus ferromagnetischem Material ausbildbar ist und somit die Magnetfeldlinien direkt um die Spule des Elektromagneten herumleitbar sind.

Bei einer vorteilhaften Ausgestaltung weist das Keilgetriebe als eintreibendes Riegelteil das von dem Ankerteil antreibbares Riegelteil auf und weist zwei abtreibende Riegelteile auf, welches jeweils eine Schrägfläche aufweist,
wobei jedes abtreibende Riegelteil jeweils mit einem Bremsbelagträger verbunden ist, der vom Riegelteil gegen eine Bremstrommel der Rolle drückbar ist. Von Vorteil ist dabei, dass die Winkelumlenkung eine einfache Betätigung der Bremse ermöglicht.

Bei einer vorteilhaften Ausgestaltung sind die beiden Bremsbelagträger mittels eines Drehlagers verbunden und werden mittels eines Federelements aufeinander zu bewegt, insbesondere in Umfangsrichtung,
insbesondere wobei das Drehlager in Umfangsrichtung beabstandet ist, insbesondere maximal beabstandet ist, vom Federelement. Von Vorteil ist dabei, dass eine einfach aufbaubare Trommelbremse mit Rückstellfeder realisierbar ist.

Bei einer vorteilhaften Ausgestaltung weist die Rolle einen die Bremstrommel radial umgebenden Rollbelag auf, insbesondere wobei der Rollbelag aus vulkanisiertem Material, insbesondere Gummi, besteht. Von Vorteil ist dabei, dass geringe Fahrgeräusche bewirkt werden.

Bei einer vorteilhaften Ausgestaltung erfolgt die Durchleitung der die Trommelbremse betätigenden Kraft radial innerhalb des Drehlagers. Von Vorteil ist dabei, dass ein kompakter Aufbau ermöglicht ist.

Bei einer vorteilhaften Ausgestaltung ist das Drehlager mittels eines in einem Außenring gleitgelagerten Innenrings realisiert, insbesondere deren Ringachsen identisch sind,
wobei der Innenring im Außenring in axialer Richtung formschlüssig angeordnet ist oder der Außenring im Innenring,
insbesondere wobei der Innenring in einer Nut des Außenrings vorgesehen ist oder der Außenring in einer Nut des Innenrings vorgesehen ist,
insbesondere wobei der die Nut aufweisende Teil, also Innenring oder Außenring, mehrteilig ausgeführt ist,
insbesondere wobei der Außenring am Gestell des Mobilteils fest angeordnet ist und der Innenring am Schwenkteil fest angeordnet ist. Von Vorteil ist dabei, dass das Drehlager derart ausgebildet ist, dass im radialen Innenbereich die Betätigungskraft durchleitbar ist.

Bei einer vorteilhaften Ausgestaltung sind Ankerteil und Riegelteil in Längsrichtung der Spule des Elektromagneten voneinander bea'bstandet, insbesondere wobei die Kugel der Kupplung zwischengeordnet ist. Von Vorteil ist dabei, dass eine einfache Kupplung realisierbar ist.

Bei einer vorteilhaften Ausgestaltung ist mittels einer Arretiereinheit die Schwenkeinheit am Gestell lösbar arretierbar,
insbesondere wobei die Arretiereinheit einen Elektromagnet umfasst, dessen linear verschiebbares Ankerteil in eine Vertiefung, insbesondere Bohrung, zur Arretierung hineinfahrbar ist,
insbesondere wobei bei Bestromung des Elektromagneten das Ankerteil entgegen der Kraft eines Federelements herausfahrbar ist, insbesondere zur Dearretierung. Von Vorteil ist dabei, dass die Lenkrolleneinheit fixiert ausrichtbar ist in der Fahrtrichtung.

Weitere Vorteile ergeben sich aus den Unteransprüchen.

Die Erfindung wird nun anhand von Abbildungen näher erläutert:

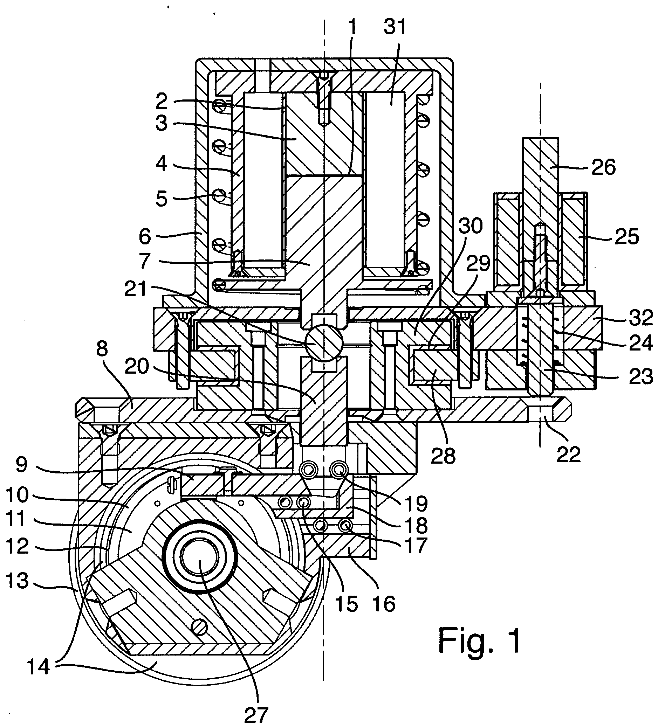

In der Figur 1 ist ein Querschnitt durch eine Rollenlagereinheit eines erfindungsgemäßen Mobilteils mit Trommelbremse gezeigt.

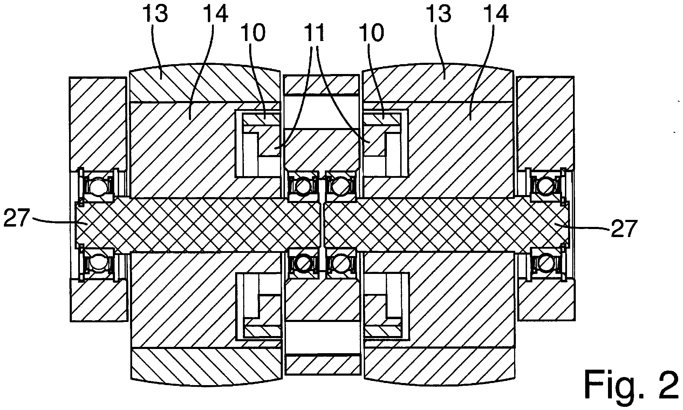

In der Figur 2 ist ein Längsschnitt durch die Rollen der Rollenlagereinheit gezeigt.

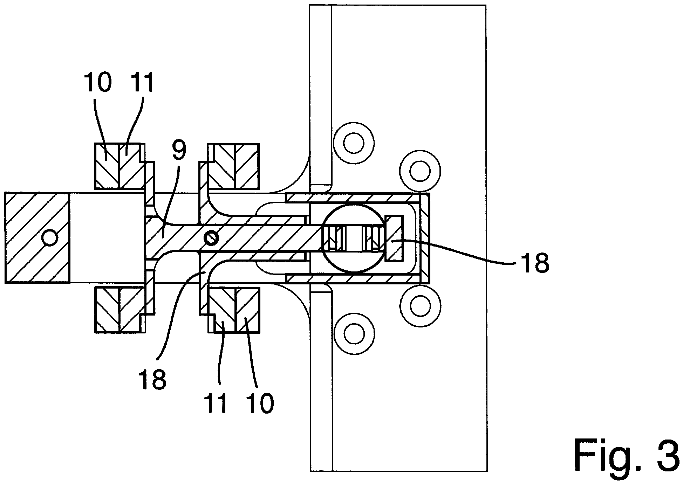

In der Figur 3 ist eine Betätigungseinheit der Trommelbremse gezeigt.

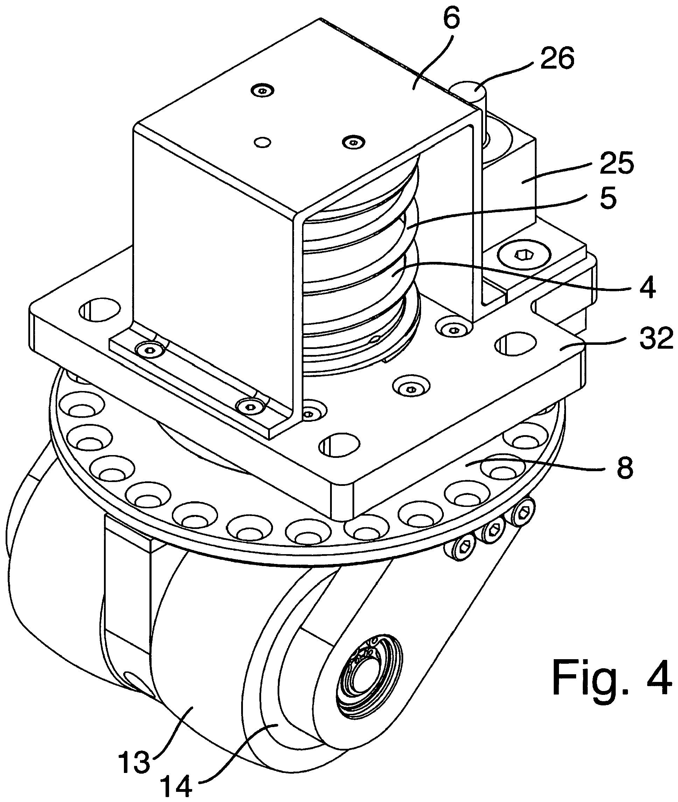

In der Figur 4 ist eine Schrägansicht der Rollenlagereinheit gezeigt.

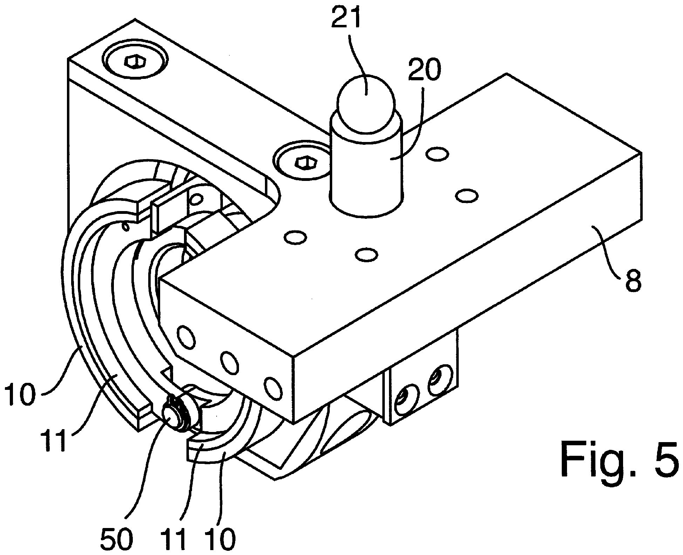

In der Figur 5 sind die von der Betätigungseinheit verschiebbaren Bremsbelagträger 11 gezeigt.

Das erfindungsgemäße Mobilteil ist vorzugsweise als fahrerloses Transportsystem und/oder automatisch geführtes Fahrzeug ausgeführt. Also bezieht sich die Erfindung auch auf mobile Transportsysteme.

Das Mobilteil weist Rollenlagereinheiten auf, die am Gestellt des Mobilteils montiert sind und im Wesentlichen die Gewichtskraft an den Boden ableiten. Zusätzlich weist das Mobilteil ein auf die Fahrfläche von einem Federelement gedrücktes Antriebsrad auf, welches von einem Elektromotor antreibbar ist.

Jede der Rollenlagereinheiten weist Rollen auf, welche über eine Rollenlagereinheit gelagert sind, wobei die Rollenlagereinheit selbst wiederum drehbar gelagert ist am Gestell des Mobilteils.

Die Rollen sind mittels einer elektromagnetisch betätigbaren Bremsvorrichtung abbremsbar, wobei die Bremsvorrichtung nach Art einer Trommelbremse aufgebaut ist.

Eine Spule 31 erzeugt bei ihrer Bestromung ein Magnetfeld, welches den Luftspalt 1 zwischen einem mit einem Gehäuseteil 6 verbundenen Spulenkern 3 und einem Ankerteil 7 verringert.

Die Spule 31 ist um einen hülsenartigen Spulenträger vorgesehen, der aus Aluminium ist oder aus Kunststoff gefertigt ist und als Gleitlager fungiert für ein in Längsrichtung der Spule 31 verschiebbar angeordnetes Ankerteil 7.

Bei Bestromung der Spule 31 wird das Ankerteil 7 zum Spulenkern 3 hin angezogen entgegen der Federkraft eines Federelements, welches das Ankerteil 7 wegdrückt vom Spulenkerngehäuseteil 4. Das Spulenkerngehäuseteil 4 umgibt die Spule 31 und leitet das im Spulenkern 3 geleitete Magnetfeld an der Außenseite der Spule 31 herum. Das Ankerteil 7 ragt in das Spuleninnere hinein, so dass ein Luftspalt 1 zwischen dem Ankerteil 7 und dem Spulenkern 3 bei Nichtbestromung der Spule 31 größer ist als bei Bestromung der Spule 31.

Ankerteil 7 und Spulenkern 3 sind aus ferromagnetischem Material, wie Stahl oder Ferrit.

Das Federelement 5 stützt sich an seinem ersten Ende am Spulenkerngehäuseteil 4 ab und mit seinem zweiten Ende am Ankerteil 7. Das Ankerteil 7 wird also vom Federelement 5 aus dem von der Spule 31 und dem Spulenträger umgebenen Raumbereich herausgedrückt. Bei Bestromung hingegen wird das Ankerteil 7 hineingezogen in diesen Raumbereich.

Das Gehäuseteil 6 umgibt das Spulenkerngehäuseteil 4 samt Federelement 5.

Das Gehäuseteil 6 ist verbunden mit der Tragplatte 32. An der Tragplatte 32 ist das Außenringteil 28 verbunden.

Zwischen dem Außenringteil 28 und dem Innenringteil 30 ist das Gleitlagerelement 29 angeordnet. Außenringteil 28 und Innenringteil 30 sind somit aneinander drehbar gelagert, wobei die Drehachse mit der Symmetrieachse, also Längsachse, der Spule 31 und des Ankerteils 7 identisch ist.

Am Innenringteil 30 ist die Scheibe mit Bohrbild von Bohrungen 22 verbunden, insbesondere schraubverbunden. Die Bohrungen 22 sind auf demselben Radialabstand von der Drehachse angeordnet und in Umfangsrichtung voneinander beabstandet, insbesondere regelmäßig.

Am Tragteil 32 ist auch eine Arretiereinheit angeordnet, die eine Spule 25 aufweist, bei deren Bestromung wiederum entgegen der Federkraft eines Federelements 24 ein Arretierriegel 23 in die Spule 25 in Richtung zum Spulenkern 26 hin angezogen wird und somit die der Arretierriegel aus der Bohrung 22 herausgezogen wird und somit die Scheibe 8 frei gegeben wird. Bei Nichtbestromung hingegen drückt das Federelement 24 den Arretierriegel 23 in die Bohrung hinein und fixiert somit die Drehstellung der Scheibe 8, also die Winkelstellung der Scheibe 8 relativ zum Tragteil 32. Auf diese Weise ist die Fahrtrichtung des Mobilteils festlegbar.

Das Ankerteil 7 ist mittels einer Kupplung 21 mit dem Riegelteil 20 in Wirkverbindung. Die Kupplung ist als Kugel realisiert, welche zwischen Riegelteil 20 und Ankerteil 7 angeordnet ist und in eine jeweilige Vertiefung hineinragt, also in eine Vertiefung am Riegelteil 20 und in eine Vertiefung am Ankerteil 7.

Das Riegelteil 20 bildet zusammen mit dem Riegelteil 9 ein Keilgetriebe. Dabei weist das Riegelteil 9 eine Schrägfläche auf, so dass bei durch das Ankerteil 7 verursachter Verschiebung des Riegelteils 20 in Richtung auf das Riegelteil 9 hin dieses Riegelteil 9 quer zur Verschiebungsrichtung des Riegelteils 20 verschoben wird. Zur Reibungsverminderung sind am Riegelteil 20 Lagerrollen gelagert. die an der Schrägfläche abrollen. Eine der beiden Lagerrollen rollt an der am Riegelteil 9 ausgeprägten Schrägfläche ab, so dass dieses in der Querrichtung zur Verschiebungsrichtung des Riegelteils 20 weggedrückt wird. Ebenso ist eine weitere Lagerrolle 19 am Riegelteil 20 angeordnet, so dass ein weiteres Riegelteil 18 entgegengesetzt zum Riegelteil 9 verschoben wird, wenn das Riegelteil 20 nach unten verschoben wird, also in Richtung seiner Längsachse geschoben wird.

Das Riegelteil 18 ist über Lagerrollen 17 am Tragteil 16 gelagert. Das Riegelteil 9 ist über Lagerrollen 15 am Riegelteil 18 gelagert.

Am vom Riegelteil 20 abgewandten Endbereich des Riegelteils 9 ist ein Bremsbelagträger 11 angeordnet, der an seinem äußeren Umfang einen Bremsbelag 10 aufweist.

Das von dem verschobenen Riegelteil 20 bewirkte Wegdrücken des Riegelteils 9 bewirkt, dass der Bremsbelag 10 den Luftspalt 12 überwindet und gegen die Bremstrommel 14 gedrückt wird und somit die Bremsung erfolgt.

Die Bremstrommel 14 ist als Ringteil ausgeführt und trägt an ihrem äußeren Umfang den Rollbelag 13, insbesondere aus Kunststoff, Gummi oder aus einem anderen vulkanisierten Material. Mit dem Rollbelag 13 rollt die Rolle auf der Fahrfläche ab.

Das von dem verschobenen Riegelteil 20 bewirkte Wegdrücken des Riegelteils 18 bewirkt, dass der mit dem Riegelteil 18 verbundene weitere Bremsbelagträger mit seinem an ihm angeordneten Bremsbelag 10 einen entsprechenden Luftspalt überwindet und ebenfalls gegen die Bremstrommel 14 gedrückt wird und somit die Bremsung erfolgt.

Mittels des Keilgetriebes werden also die beiden Riegelteile 9 und 18 voneinander weggedrückt, wenn das Riegelteil 20 nach unten geschoben wird. Dies erfolgt entgegen der von einem Federelement erzeugten Federkraft, welche die beiden Bremsbelagträger 11 aufeinander zu drückt.

Beim Herausfahren des Riegelteils 20, also beim nach oben Verfahren, werden also die Bremsbelagträger einander angenähert.

Die Bremsbelagträger 11 sind dabei an einer Umfangsposition an einem Drehlager 50 drehbar gelagert.

Das Federelement ist in Umfangsrichtung dem Drehlager 50 gegenüber liegend angeordnet, um die Bremsbelagträger 11 aufeinander hinzudrücken. Der jeweilige Bremsbelagträger 11 ist in diesem Umfangswinkelbereich mit einem jeweiligen Riegelteil 9 beziehungsweise 18 verbunden, so dass die Verschiebung der Riegelteile 9 und 18 entgegen der vom Federelement erzeugten Federkraft erfolgen muss..

Die Hülse 2, insbesondere aus Aluminium oder Kunststoff, bildet einen nach radial innen gerichtete Begrenzung der Spule 31 und fungiert somit zumindest teilweise als Spulenkörper, leitet jedoch kein Magnetfeld.

Der Spulenkern 3 ragt in die Hülse 2 hinein, so dass der Luftspalt 1 zwischen Spulenkern 3 und Spulenkerngehäuseteil 4 von der Hülse 2 und dem Spulenkern 3 sowie dem Spulenkerngehäuseteil 4 begrenzt ist. Das Spulenkerngehäuseteil 4 leitet die vom Spulenkern 3 her kommenden Magnetfeldlinien am Außenumfang zurück und über einen Luftspalt in das Ankerteil 7, welches die Magnetfeldlinien in den von der Spule umgebenen Innenraum leitet, so dass diese nur noch den Arbeitsluftspalt 1 zwischen Spulenkern 3 und Ankerteil 7 überwinden müssen.

Das am Spulenkerngehäuseteil 4 festgelegte Federelement 5 drückt das Ankerteil 7 nach unten, also in Richtung der Symmetrieachse der Hülse 2.

Die Bremstrommel 14 ist jeweils mit einer Welle 27 verbunden, die an einem Tragteil über Lager gelagert ist. Dieses Tragteil ist schwenkbar angeordnet, wobei die Schwenkachse der Längsachse des Riegelteils 20 entspricht. Auf diese Weise ist die Rolle in Fahrtrichtung drehbar und die Lagerung der Rolle mit Nachlauf realisiert. Die Schwenkachse, also Drehachse, der Verschwenkung ist gleichzeitig auch die Übertragung der die Trommelbremse betätigenden Kraft, welche aus der Magnetkraft des Hubmagneten und der entgegenwirkenden Federkraft des Federelements 5 bewirkt ist.

Das Keilgetriebe ermöglicht die durch die Schwenkachse durchgeleitete Betätigungskraft umzulenken in die wegen des Nachlaufs der Rollen, also Gelenkrollen, außerhalb der Schwenkachse angeordnete Trommelbremse.

Die als Kupplung 21 wirksame Kugel gleicht Fluchtungsfehler, insbesondere Winkelabweichungen zwischen Ankerteil 7 und Riegelteil 20 aus.

Der Innenring 30 ist mehrteilig ausgeführt, um eine einfache Montage des Drehlagers ausführbar zu machen.

### Bezugszeichenliste

1 Luftspalt
2 Hülse, insbesondere aus Aluminium oder Kunststoff
3 Spulenkern
4 Spulenkerngehäuseteil
5 Federelement
6 Gehäuseteil
7 Ankerteil
8 Scheibe mit Bohrbild von Bohrungen 22
9 Riegelteil des Keilgetriebes
10 Bremsbelag
11 Bremsbelagträger
12 Arbeitsluftspalt der Bremse
13 Rollbelag
14 Bremstrommel
15 Lagerrolle
16 Tragteil
17 Lagerrolle
18 Riegelteil des Keilgetriebes
19 Lagerrolle
20 Riegelteil des Keilgetriebes
21 Kupplung, insbesondere Kugel
22 Bohrung
23 Arretierungsriegel
24 Federelement
25 Spule der Arretierungseinheit
26 Spulenkern
27 Welle
28 Außenringteil des Drehlagers
29 Gleitlagerelement, insbesondere aus Kunststoff oder aus Weichmetall, wie Aluminium oder Bronze
30 Innenring des Drehlagers
31 Spule der Bremse
32 Tragplatte
50 Drehlager

## Patentansprüche

1. Mobilteil mit Rollenlagereinheit, insbesondere Mobilteil mit Lenkrolle,
wobei eine Rolle, insbesondere Fahrrolle, drehbar gelagert ist in einer Schwenkeinheit, welche über ein Drehlager (28, 29, 30) an einem Gestell (32) des Mobilteils gelagert ist, insbesondere wobei die Drehachsen der beiden Drehlagerungen zueinander senkrecht ausgerichtet sind, insbesondere wobei die Drehachse des Drehlagers (28, 29, 30) parallel zur Normalenrichtung der von der Rolle berührten Fahrfläche des zum Schwenken Mobilteils ausgerichtet ist,
**dadurch gekennzeichnet, dass**
an der Rolle eine Trommelbremse (10, 11) ausgebildet ist,
wobei die Betätigung der Trommelbremse von einem Elektromagnet (3, 7, 31) bewirkbar ist, welcher mit dem Gestell (32) des Mobilteils verbunden ist,
wobei die Trommelbremse vom Elektromagneten über ein Keilgetriebe (9, 18, 19, 20) betätigbar ist.

2. Mobilteil nach mindestens einem der vorangegangenen Ansprüche,
**dadurch gekennzeichnet, dass**
zwischen Elektromagnet und Keilgetriebe eine Kupplung (21) angeordnet ist, insbesondere eine eine Kugel umfassende Kupplung (21).

3. Mobilteil nach mindestens einem der vorangegangenen Ansprüche,
**dadurch gekennzeichnet, dass**
der Elektromagnet ein verschiebbar angeordnetes Ankerteil (7) aufweist, welches von einem Federelement (5, 24) auf ein erstes Riegelteil (20) des Keilgetriebes drückbar ist,
insbesondere bei Nichtbestromung der Spule (25) des Elektromagneten,
so dass ein weiteres Riegelteil (9, 18, 20) des Keilgetriebes verschoben wird, insbesondere in einer Richtung, welche einen nicht verschwindenden Winkel zur Verschiebungsrichtung des Ankerteils (7) aufweist, insbesondere einen senkrechten Winkel zur Verschiebungsrichtung des Ankerteils (7) aufweist.

4. Mobilteil nach mindestens einem der vorangegangenen Ansprüche,
**dadurch gekennzeichnet, dass**
zur Bildung des Keilgetriebes ein Riegelteil (9, 18) des Keilgetriebes eine Schrägfläche aufweist und eine auf der Schrägfläche abrollbare Rolle an einem anderen Riegelteil (20) des Keilgetriebes gelagert ist,
insbesondere wobei die Normalenrichtung der Schrägfläche einen nicht verschwindenden Winkel zur Verschiebungsrichtung des Ankerteils (7) aufweist.

5. Mobilteil nach Anspruch 3,
**dadurch gekennzeichnet, dass**
als Kupplung (21) zwischen Ankerteil (7) und dem ersten Riegelteil (20) eine Kugel zwischengeordnet ist, insbesondere in einer Vertiefungen des Ankerteils (7) und in einer Vertiefung des Riegelteils (9, 18, 20) hineinragt und/oder angeordnet ist.

6. Mobilteil nach Anspruch 3, **dadurch gekennzeichnet, dass** der Elektromagnet eine Spule (25) aufweist, und dass die Spule (25) in einem Spulenkerngehäuseteil (4) angeordnet ist, das mit einem von der Spule (25) zumindest teilweise umgebenen Spulenkern (3, 26) verbunden ist, insbesondere wobei zwischen Ankerteil (7) und Spulenkern (3, 26) ein Arbeitsluftspalt (12) angeordnet ist, welcher im von der Spule (25) in Längsrichtung überdeckten Bereich angeordnet ist.

7. Mobilteil nach Anspruch 3, **dadurch gekennzeichnet, dass**
das Keilgetriebe als eintreibendes Riegelteil (9, 18, 20) das von dem Ankerteil (7) antreibbares erstes Riegelteil (20) aufweist und zwei abtreibende Riegelteile (9, 18) aufweist, welche jeweils eine Schrägfläche aufweisen, wobei jedes abtreibende Riegelteil (9, 18) jeweils mit einem Bremsbelagträger (11) verbunden ist, der vom jeweiligen Riegelteil (9, 18) gegen eine Bremstrommel (14) der Rolle drückbar ist.

8. Mobilteil nach Anspruch 7, **dadurch gekennzeichnet, dass**
die beiden Bremsbelagträger (11) mittels eines Drehlagers (50) verbunden sind und mittels eines Federelements (5, 24) aufeinander zu bewegt werden, insbesondere in Umfangsrichtung,
insbesondere wobei das Drehlager (50) in Umfangsrichtung beabstandet ist, insbesondere maximal beabstandet ist, vom Federelement (5, 24).

9. Mobilteil nach mindestens einem der vorangegangenen Ansprüche,
**dadurch gekennzeichnet, dass**
die Rolle einen eine Bremstrommel (14) radial umgebenden Rollbelag (13) aufweist, insbesondere wobei der Rollbelag (13) aus vulkanisiertem Material, insbesondere Gummi, besteht.

10. Mobilteil nach mindestens einem der vorangegangenen Ansprüche,
**dadurch gekennzeichnet, dass**
die Durchleitung der die Trommelbremse betätigenden Kraft radial innerhalb des Drehlagers (28, 29, 30) erfolgt.

11. Mobilteil nach mindestens einem der vorangegangenen Ansprüche,
**dadurch gekennzeichnet, dass**
das Drehlager (28, 29, 30) mittels eines in einem Außenring gleitgelagerten Innenrings realisiert ist, insbesondere deren Ringachsen identisch sind,
wobei der Innenring (30) im Außenring in axialer Richtung formschlüssig angeordnet ist oder der Außenring im Innenring (30),
insbesondere wobei der Innenring (30) in einer Nut des Außenrings vorgesehen ist oder der Außenring in einer Nut des Innenrings (30) vorgesehen ist,
insbesondere wobei der die Nut aufweisende Teil, also Innenring (30) oder Außenring, mehrteilig ausgeführt ist,
insbesondere wobei der Außenring am Gestell des Mobilteils fest angeordnet ist und der Innenring (30) am Schwenkteil fest angeordnet ist.

12. Mobilteil nach Anspruch 3, **dadurch gekennzeichnet, dass**
Ankerteil (7) und erstes Riegelteil (20) in Längsrichtung der Spule (25) des Elektromagneten voneinander beabstandet sind, insbesondere wobei die Kugel der Kupplung (21) zwischengeordnet ist.

13. Mobilteil nach mindestens einem der vorgegangenen Ansprüche,
**dadurch gekennzeichnet, dass**
mittels einer Arretiereinheit (25) die Schwenkeinheit am Gestell lösbar arretierbar ist,
insbesondere wobei die Arretiereinheit einen Elektromagnet umfasst, dessen linear verschiebbares Ankerteil (26) in eine Vertiefung, insbesondere Bohrung (22), zur Arretierung hineinfahrbar ist,
insbesondere wobei bei Bestromung des Elektromagneten das Ankerteil entgegen der Kraft eines Federelements (24) herausfahrbar ist, insbesondere zur Dearretierung.

## Claims

1. Mobile part having a roller bearing unit, in particular a mobile part having a swivel caster,
wherein a roller, in particular a caster, is rotatably mounted in a swivel unit which is mounted via a rotary bearing (28, 29, 30) on a frame (32) of the mobile part,
in particular wherein the axes of rotation of the two rotary bearings are oriented perpendicular to one another, in particular wherein the axis of rotation of the rotary bearing (28, 29, 30) for swivelling is oriented parallel to the normal direction of the running surface of the mobile part, said running surface being contacted by the roller,
**characterized in that** a drum brake (10, 11) is formed on the roller,
wherein the actuation of the drum brake can be brought about by an electromagnet (3, 7, 31) which is connected to the frame (32) of the mobile part,
wherein the drum brake can be actuated by the electromagnet via a wedge gear (9, 18, 19, 20).

2. Mobile part according to at least one of the preceding claims,
**characterized in that** a coupling (21) is arranged between the electromagnet and the wedge gear, in particular a coupling (21) comprising a ball.

3. Mobile part according to at least one of the preceding claims,
**characterized in that**
the electromagnet has a displaceably arranged armature part (7) which can be pressed by a spring element (5, 24) onto a first locking part (20) of the wedge gear, in particular when no current is applied to the coil (25) of the electromagnet, so that a further locking part (9, 18, 20) of the wedge gear is displaced, in particular in a direction which has a non-vanishing angle with respect to the direction of displacement of the armature part (7), in particular a perpendicular angle with respect to the direction of displacement of the armature part (7).

4. Mobile part according to at least one of the preceding claims,
**characterized in that**,
in order to form the wedge gear, one locking part (9, 18) of the wedge gear has a sloping surface and a roller which can roll on the sloping surface is mounted on another locking part (20) of the wedge gear,
in particular wherein the normal direction of the sloping surface has a non-vanishing angle with respect to the direction of displacement of the armature part (7).

5. Mobile part according to claim 3,
**characterized in that**,
as the coupling (21), a ball is arranged between the armature part (7) and the first locking part (20), in particular protrudes into and/or is arranged in a depression of the armature part (7) and a depression of the locking part (9, 18, 20).

6. Mobile part according to claim 3,
**characterized in that**
the electromagnet has a coil (25), and **in that** the coil (25) is arranged in a coil core housing part (4) which is connected to a coil core (3, 26) that is at least partially surrounded by the coil (25),
in particular wherein a working air gap (12) is arranged between the armature part (7) and the coil core (3, 26), said working air gap being arranged in the region covered by the coil (25) in the longitudinal direction.

7. Mobile part according to claim 3,
**characterized in that**
the wedge gear has as the driving locking part (9, 18, 20) the first locking part (20) which can be driven by the armature part (7), and has two driven locking parts (9, 18) which each have a sloping surface, wherein each driven locking part (9, 18) is respectively connected to a brake lining carrier (11) which can be pressed by the respective locking part (9, 18) against a brake drum (14) of the roller.

8. Mobile part according to claim 7,
**characterized in that**
the two brake lining carriers (11) are connected by means of a rotary bearing (50) and are moved towards one another by means of a spring element (5, 24), in particular in the circumferential direction,
in particular wherein the rotary bearing (50) is spaced apart from the spring element (5, 24) in the circumferential direction, in particular spaced apart by a maximum distance.

9. Mobile part according to at least one of the preceding claims,
**characterized in that**
the roller has a roller covering (13) which radially surrounds a brake drum (14),
in particular wherein the roller covering (13) is made of vulcanized material, in particular rubber.

10. Mobile part according to at least one of the preceding claims,
**characterized in that**
the force actuating the drum brake is conducted radially within the rotary bearing (28, 29, 30).

11. Mobile part according to at least one of the preceding claims,
**characterized in that**
the rotary bearing (28, 29, 30) is realized by means of an inner ring which is slideably mounted in an outer ring, in particular the ring axes of said rings being identical, wherein the inner ring (30) is arranged in the outer ring with a form fit in the axial direction, or the outer ring in the inner ring (30),
in particular wherein the inner ring (30) is provided in a groove of the outer ring or the outer ring is provided in a groove of the inner ring (30),
in particular wherein the part having the groove, that is to say the inner ring (30) or the outer ring, is formed of multiple parts,
in particular wherein the outer ring is fixedly arranged on the frame of the mobile part and the inner ring (30) is fixedly arranged on the swivel part.

12. Mobile part according to claim 3,
**characterized in that**
the armature part (7) and the first locking part (20) are spaced apart from one another in the longitudinal direction of the coil (25) of the electromagnet, in particular wherein the ball of the coupling (21) is arranged therebetween.

13. Mobile part according to at least one of the preceding claims,
**characterized in that**
the swivel unit on the frame can be releasably locked by means of a locking unit (25),
in particular wherein the locking unit comprises an electromagnet, the linearly displaceable armature part (26) of which can be moved into a depression, in particular a bore (22), for locking purposes,
in particular wherein, when current is applied to the electromagnet, the armature part can be withdrawn counter to the force of a spring element (24), in particular for unlocking purposes.

## Revendications

1. Elément mobile équipé d'une unité de montage de roulette, notamment élément mobile muni d'une roulette directrice,
une roulette, en particulier une roulette de roulement, étant montée à rotation dans une unité pivotante montée sur un châssis (32) dudit élément mobile, par l'intermédiaire d'un palier tournant (28, 29, 30),
sachant notamment que les axes de rotation des deux systèmes de montage rotatif sont orientés perpendiculairement l'un à l'autre, l'axe de rotation du palier tournant (28, 29, 30) étant orienté, en particulier, parallèlement à la direction normale à la surface de roulement avec laquelle la roulette est en contact, en vue de faire pivoter ledit élément mobile,
**caractérisé par le fait**
**qu'**un frein (10, 11) à tambour est ménagé sur la roulette,
l'actionnement dudit frein à tambour pouvant être provoqué par un électro-aimant (3, 7, 31) relié au châssis (32) de l'élément mobile,
ledit frein à tambour pouvant être actionné, par ledit électro-aimant, par l'intermédiaire d'un mécanisme (9, 18, 19, 20) à clavette.

2. Elément mobile selon la revendication 1,
**caractérisé par le fait**
**qu'**un accouplement (21), en particulier un accouplement (21) incluant une bille, est interposé entre l'électro-aimant et le mécanisme à clavette.

3. Elément mobile selon au moins l'une des revendications précédentes, **caractérisé par le fait que**
l'électro-aimant comporte un induit (7) agencé à coulissement et pouvant être poussé, par un élément élastique (5, 24), vers une première partie de verrouillage (20) du mécanisme à clavette,
en particulier lorsque la bobine (25) dudit électro-aimant est privée de courant,
de sorte qu'une autre partie de verrouillage (9, 18, 20) dudit mécanisme à clavette est animée d'un coulissement, notamment dans une direction décrivant un angle non infime par rapport à la direction de coulissement dudit induit (7), en particulier un angle droit par rapport à ladite direction de coulissement de l'induit (7).

4. Elément mobile selon au moins l'une des revendications précédentes, **caractérisé par le fait que**,
pour former le mécanisme à clavette, une partie de verrouillage (9, 18) dudit mécanisme à clavette présente une surface inclinée et
un galet, pouvant rouler sur ladite surface inclinée, est monté sur une autre partie de verrouillage (20) dudit mécanisme à clavette,
sachant notamment que la direction normale à ladite surface inclinée décrit un angle non infime par rapport à la direction de coulissement de l'induit (7).

5. Elément mobile selon la revendication 3,
**caractérisé par le fait**
**qu'**une bille est interposée, en tant qu'accouplement (21), entre l'induit (7) et la première partie de verrouillage (20) et pénètre, en particulier, dans une creusure dudit induit (7) et dans une creusure de la partie de verrouillage (9, 18, 20), et/ou est logée dans ces dernières.

6. Elément mobile selon la revendication 3,
**caractérisé par le fait que**
l'électro-aimant comporte une bobine (25) ; et **par le fait que**
ladite bobine (25) est logée dans une partie (4) formant carter de noyau de bobine, reliée à un noyau (3, 26) au moins partiellement entouré par ladite bobine (25),
sachant notamment qu'un entrefer de travail (12), réservé entre ledit induit (7) et ledit noyau (3, 26) de la bobine, est situé dans la région recouverte par ladite bobine (25) dans la direction longitudinale.

7. Elément mobile selon la revendication 3,
**caractérisé par le fait que**
le mécanisme à clavette comprend, en tant que partie de verrouillage (9, 18, 20) d'entrée, la première partie de verrouillage (20) pouvant être entraînée par l'induit (7), et deux parties de verrouillage (9, 18) de sortie qui sont respectivement pourvues d'une surface inclinée,
chaque partie de verrouillage (9, 18) de sortie étant reliée à un support respectif (11) de garniture de freinage pouvant être pressé, par la partie de verrouillage (9, 18) considérée, contre un tambour de freinage (14) de la roulette.

8. Elément mobile selon la revendication 7,
**caractérisé par le fait que**
les deux supports (11) de garnitures de freinage sont reliés au moyen d'un palier tournant (50) et sont mus en direction l'un de l'autre au moyen d'un élément élastique (5, 24), en particulier dans le sens périphérique,
sachant notamment que ledit palier tournant (50) est espacé dudit élément élastique (5, 24) dans le sens périphérique, en particulier espacé de la distance maximale.

9. Elément mobile selon au moins l'une des revendications précédentes, **caractérisé par le fait que**
la roulette comporte une garniture de roulement (13) ceinturant le tambour de freinage (14) dans le sens radial,
sachant notamment que ladite garniture de roulement (13) consiste en un matériau vulcanisé, du caoutchouc en particulier.

10. Elément mobile selon au moins l'une des revendications précédentes, **caractérisé par le fait que**
le trajet de la force actionnant le frein à tambour parcourt intérieurement le palier tournant (28, 29, 30), dans le sens radial.

11. Elément mobile selon au moins l'une des revendications précédentes, **caractérisé par le fait que**
le palier tournant (28, 29, 30) est concrétisé par une bague intérieure logée dans une bague extérieure avec faculté de glissement,
les axes desdites bagues étant notamment identiques,
avec intégration par complémentarité de formes, dans le sens axial, de la bague intérieure (30) dans la bague extérieure, ou de ladite bague extérieure dans ladite bague intérieure (30),
sachant notamment que la bague intérieure (30) est prévue dans une rainure de la bague extérieure, ou que ladite bague extérieure est prévue dans une rainure de ladite bague intérieure (30),
étant notamment précisé que la pièce présentant ladite rainure, à savoir la bague intérieure (30) ou la bague extérieure, est réalisée en plusieurs parties,
sachant, en particulier, que ladite bague extérieure occupe une position fixe sur le châssis dudit élément mobile, et que ladite bague intérieure (30) occupe une position fixe sur la partie pivotante.

12. Elément mobile selon la revendication 3,
**caractérisé par le fait que**
l'induit (7) et la première partie de verrouillage (20) sont espacés l'un de l'autre dans la direction longitudinale de la bobine (25) de l'électro-aimant, notamment avec interposition de la bille de l'accouplement (21).

13. Elément mobile selon au moins l'une des revendications précédentes, **caractérisé par le fait que**
l'unité pivotante peut être arrêtée sur le châssis de manière libérable, au moyen d'une unité d'arrêt (25),
sachant, en particulier, que ladite unité d'arrêt inclut un électro-aimant dont l'induit (26), apte à coulisser linéairement, peut être engagé dans une creusure et notamment dans un alésage (22), en vue de provoquer l'arrêt,
étant précisé, en particulier, que ledit induit peut être extrait en opposition à la force d'un élément élastique (24), lors d'un passage du courant par ledit électro-aimant, notamment en vue de neutraliser l'arrêt.
